# EUROPEAN PATENT APPLICATION

(11) **EP 4 231 156 A1**
(43) Date of publication of application: **23.08.2023**
(21) Application number: 21900382.9
(22) Date of filing: 11.11.2021
(51) Int. Cl.: G06F 11/36

(54) **CALCULATOR AND METHOD FOR SELECTING CORRECTION LOCATION OF SOFTWARE**

(30) Priority: 01.12.2020 JP 2020199315
(71) Applicant: Hitachi, Ltd., Tokyo 100-8280 (JP)
(72) Inventor: KITAGAWA Kenji, Tokyo 100-8280 (JP); KAWAKAMI Masumi, Tokyo 100-8280 (JP)
(74) Representative: Manitz Finsterwald Patent- und Rechtsanwaltspartnerschaft mbB
(86) International application number: PCT/JP2021/041504
(87) International publication number: WO 2022/118627

(57) **Abstract**

A computer receives, as inputs, a software source code including statements and information for managing the statements including elements to be modified, as correction part candidates, selects the correction part candidate and executes score calculation processing for calculating a score for evaluating time and effort to modify the elements included in the selected correction part candidate, and selects at least one of the correction part candidate to be modified, based on the score. The score calculation processing includes processing for specifying, by analyzing the software source code, elements of statements among the plurality of statements other than the selected correction part candidates affected by the modification of the elements included in the selected correction part candidates, and the elements included in the selected correction part candidates, and processing for calculating the score of the selected correction part candidates based on the influence range.

## Description

### Incorporation by Reference

This application claims priority to Japanese Patent Application No. 2020-199315 filed on December 1, 2020, the contents of which are incorporated herein by reference.

### Technical Field

The present invention relates to a technique for correcting a defect of software.

### Background Art

In software development, an operation of software that is different from the specification or is not assumed by a developer is called a defect. It is desirable that all defects are corrected before software is released.

A general method for detecting a defect includes a test. In the test, based on specifications or developer's intention, inputs and outputs are created as test cases, and a check is made whether the software returns correct outputs in response to inputs using the test cases. In a case where an output different from the specifications or developer's intention is returned, or in a case where the software is stopped due to the occurrence of an exception, a determination is made that a defect has occurred.

The developer determines a cause part by analyzing which part of the software including the defect has undergone unexpected processing, and corrects the software for appropriate input and output. Large scale and complex software has a problem that the cost required for analysis and correction as described above is high. Further, in a case where a defect is detected near completion of the software, an analysis range is wide in many cases, which easily leads to an increase in the cost.

A known example of a technique for efficiently analyzing and correcting defects of software includes a technique described in PTL 1. PTL 1 describes that "a computer having a model format verification function performs acquiring specification information including an input interface specification, an output interface specification, and an internal specification of a software component, verifying the software component using the format verification function in accordance with the specification information in which the input interface specification in the specification information has been changed to a value other than a normal value, and storing a defect propagation path with an input changed to the value other than the normal value being associated with an output that does not satisfy the output interface specification in a case where an example that an output value that does not satisfy the output interface specification is found in the verification".

### Citation List

### Patent Literature

PTL 1: JP 2012-128727 A

### Non Patent Literature

NPL 1: Peter Dinges, Gul Agha, "Targeted Test Input Generation Using Symbolic-Concrete Backward Execution", 29th ACM/IEEE international conference on Automated software engineering, September 2014, Pages 31-36

### Summary of Invention

### Technical Problem

The technique described in PTL 1 can evaluate a behavior of a software component in a case where an abnormal input is given, but cannot analyze a cause of a defect such as an abnormality of an output with respect to a normal input. Further, PTL 1 does not disclose a method for selecting a correction part in a case where a plurality of correction part candidates for removing a defect is present.

### Solution to Problem

A representative example of the invention disclosed in the present application is as follows. That is, a computer includes a processor, and a storage device connected to the processor, the processor being configured to receive, as inputs, a software source code including a plurality of statements including a plurality of elements, and correction part candidate information for managing, as correction part candidates, statements, among the plurality of statements including the plurality of elements, to be modified for removing a defect of the software source code, select the correction part candidate and execute score calculation processing for and calculating a score for evaluating time and effort to modify elements included in the selected correction part candidate, and select at least one of the correction part candidate to be modified, based on the score of each of a plurality of correction part candidates. The score calculation processing includes first processing for specifying, by analyzing the software source code, elements of statements among the plurality of statements other than the selected correction part candidates affected by the modification of the elements included in the selected correction part candidates, and the elements included in the selected correction part candidates, as an influence range, and second processing for calculating the score of the selected correction part candidate based on the influence range.

### Advantageous Effects of Invention

According to the present invention, a correction part requiring less time and effort for modification can be selected from correction part candidates for removing a defect. Problems, configurations, and effects other than those described above will be clarified by the following description of embodiments.

### Brief Description of Drawings

[FIG. 1] FIG. 1 illustrates a configuration example of a defect analysis device according to a first embodiment.
[FIG. 2] FIG. 2 illustrates an example of a source code according to the first embodiment.
[FIG. 3] FIG. 3 shows a concept of correction part candidates stored in correction part candidate information according to the first embodiment.
[FIG. 4] FIG. 4 is a flowchart describing an example of correction part determination processing executed by the defect analysis device according to the first embodiment.
[FIG. 5] FIG. 5 is a flowchart describing an example of correction part candidate analysis processing executed by the defect analysis device according to the first embodiment.
[FIG. 6] FIG. 6 illustrates a configuration example of a defect analysis device according to a second embodiment.
[FIG. 7] FIG. 7 illustrates an example of user and organization management information according to the second embodiment.
[FIG.8] FIG. 8 illustrates an example of cost management information according to the second embodiment.
[FIG. 9] FIG. 9 illustrates an example of influence range specified by the defect analysis device according to the second embodiment.
[FIG.10] FIG. 10 illustrates an example of cost management information according to a third embodiment.

### Description of Embodiments

Hereinafter, preferred embodiments of the present invention will be described with reference to the drawings. However, the present invention is not to be construed as being limited to the description of the following embodiments. Those skilled in the art can easily understand that the specific configuration can be changed without departing from the spirit or gist of the present invention.

In the configurations of the invention described below, identical or similar configurations or functions are denoted by identical reference numerals, and redundant description is omitted.

Notations such as "first", "second", and "third" in the present specification and the like are given to identify components, and do not necessarily limit the number or order.

### First Embodiment

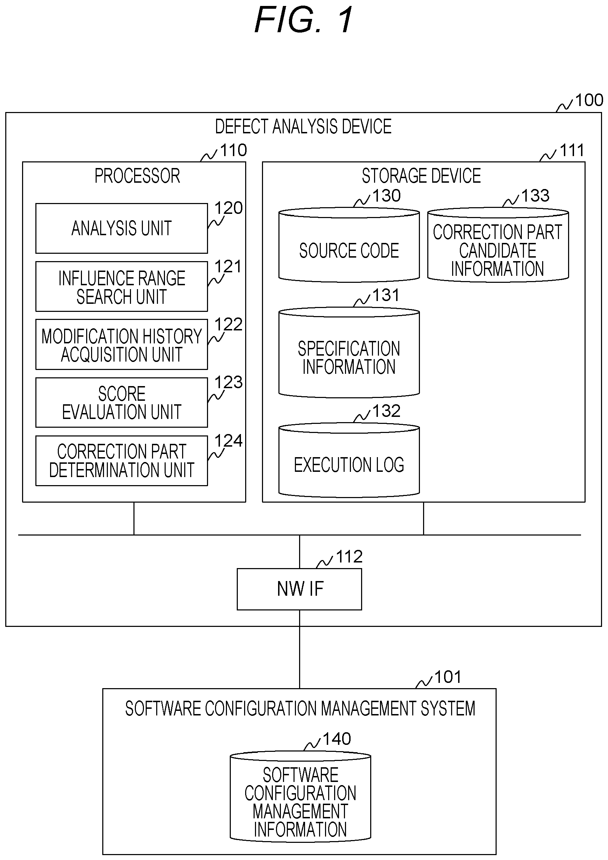

FIG. 1 illustrates a configuration example of a defect analysis device 100 according to a first embodiment.

The defect analysis device 100 includes a processor 110, a storage device 111, and a network interface 112. Hardware elements are connected via an internal bus. The defect analysis device 100 is connected to a software configuration management system 101 via a network such as a wide area network (WAN) or a local area network (LAN).

Note that the defect analysis device 100 may include a storage medium such as a hard disk drive (HDD) and a solid state disk (SSD), may include input devices such as a keyboard, a mouse, and a touch panel, and may include output devices such as a display and a printer.

The processor 110 executes a program stored in the storage device 111. The processor 110 executes processing in accordance with the program to operate as a functional unit that achieves a specific function. In the following description, in a case where processing is described using a functional unit as a subject, this means that the processor 110 executes a program that achieves the functional unit.

The storage device 111 stores a program executed by the processor 110 and information used by the program. The storage device 111 is also used as a work area.

The network interface 112 is an interface for connection to an external device or an external system via a network.

The storage device 111 according to the first embodiment stores a source code 130, specification information 131, an execution log 132, and correction part candidate information 133.

The source code 130 is a software source code to be analyzed. The source code 130 includes a plurality of statements including functions, instructions, and the like as elements. The source code 130 is generally divided into functional units. A processing flow of the source code 130 is constructed by calling a function.

The specification information 131 is information about a specification of software. The specification information 131 stores, for example, a name of a function included in the source code 130, and names, types, and ranges of an input value and a return value of the function.

The execution log 132 is an execution log of software. The execution log 132 includes a calling record of a function, an input value and a return value at the time of calling the function, and the like.

The correction part candidate information 133 is information for managing correction part candidates including elements to be modified for removing a defect. The correction part candidate information 133 of the first embodiment stores an execution path and a path condition acquired by symbolic execution.

The execution path includes one or more statements. In the first embodiment, one line is treated as one statement, and one statement is managed as one correction part candidate. In modification of the source code 130, an element such as a function included in the statement is modified.

The processor 110 of the first embodiment executes the programs stored in the storage device 111 to function as an analysis unit 120, an influence range search unit 121, a modification history acquisition unit 122, a score evaluation unit 123, and a correction part determination unit 124. Note that as for each functional unit, a plurality of the functional units may be aggregated into one functional unit, or one functional unit may be divided into a plurality of functional units correspondingly to respective functions.

The analysis unit 120 analyzes the source code 130 and specifies correction part candidates.

The influence range search unit 121 searches for elements affected by modification of the elements included in the correction part candidates, and outputs the searched elements and the elements included in the correction part candidates as an influence range. Specifically, the influence range search unit 121 searches for functions that call functions included in the correction part candidates, and further searches for functions that call the searched functions. The influence range search unit 121 repeatedly executes the search to output, as the influence range, a tree of a calling relationship between the functions originating at the correction part candidates.

Note that, in a case where the correction part candidates stored in the correction part candidate information 133 are associated with information (for example, a path condition) regarding a variable and a value constraint that cause a defect, the influence range search unit 121 can limit the calling relationship between the functions based on the information. By following the calling relationship between the functions included in the correction part candidates, the calling relationship is such that the variable becomes an inappropriate value when a defect occurs. In this case, the calling relationship can be excluded from the influence range. The constraint of the variable can be specified by using symbolic execution or the like.

The modification history acquisition unit 122 acquires modification histories regarding the functions extracted as the influence range from the software configuration management system 101.

The software configuration management system 101 has a function of managing a version of software, and holds software configuration management information 140 that stores the source code 130 of the software of each version. In the source code 130 stored in the software configuration management information 140, identification information about a user or an organization that has made a modification, a date and time of the modification, and the like are managed in association with each other. When the version is updated, the updated source code 130 is registered in the software configuration management information 140. In general, the software configuration management system 101 manages versions of the software in units of files. The modification history acquisition unit 122 has a function of acquiring modification histories in units of functions by comparing files before and after modifications.

The score evaluation unit 123 calculates a score indicating time and effort in modifying the elements included in the correction part candidates, based on the influence range of the correction part candidates. For example, the score evaluation unit 123 calculates the number of functions included in the influence range as a score. Further, the score evaluation unit 123 calculates the total number of the modification histories of each function included in the influence range as a score. The score may be calculated in consideration of the depth of the layer of the tree.

The correction part determination unit 124 determines correction part candidates to be modified, based on the score of each correction part candidate.

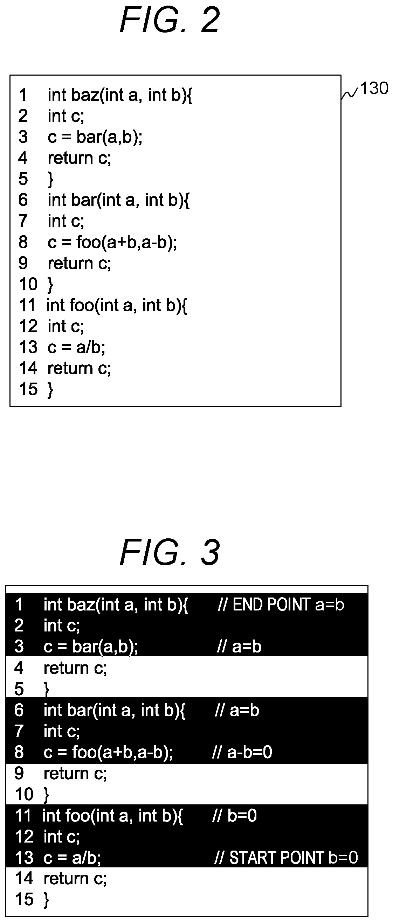

FIG. 2 illustrates an example of the source code 130 according to the first embodiment. FIG. 3 shows a concept of the correction part candidates stored in the correction part candidate information 133 according to the first embodiment.

The source code 130 illustrated in FIG. 2 includes a function baz, a function bar, and a function foo. The function baz calls the function bar, and the function bar calls the function foo. In a case where division by zero occurs in the function foo, an occurrence of a defect is detected. In this case, the execution log 132 includes logs related to the calling of the function baz, the function bar, and the function foo, and occurrence of division by 0.

Note that the variables included in the functions are local variables. Therefore, variables a and b included in each function are identical characters but indicate different variables.

In FIG. 3, a group of statements in which black and white of the source code 130 are inverted indicates the execution path. A path condition is inserted as a comment into the statements included in the execution path.

The correction part candidate information 133 stores information for managing the relationship as illustrated in FIG. 3.

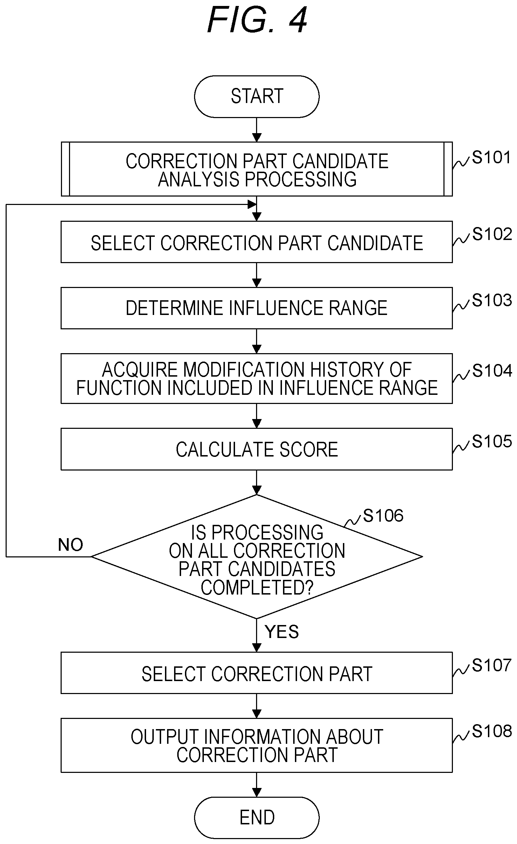

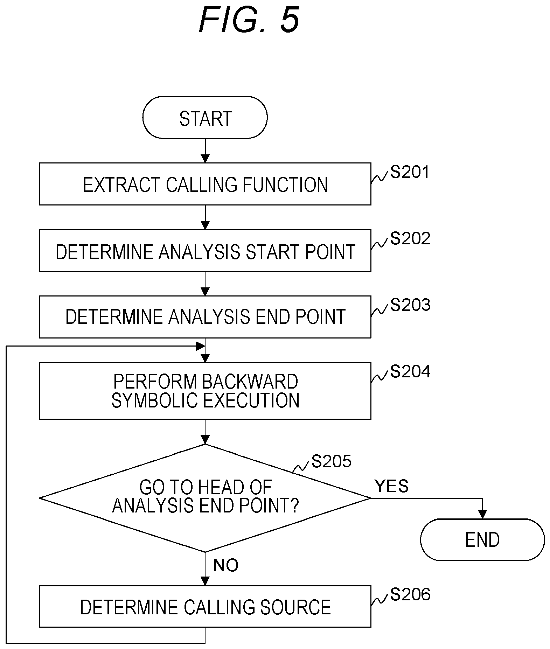

FIG. 4 is a flowchart describing an example of correction part determination processing executed by the defect analysis device 100 according to the first embodiment. FIG. 5 is a flowchart describing an example of correction part candidate analysis processing executed by the defect analysis device 100 according to the first embodiment.

When receiving inputs of the source code 130, the specification information 131, and the execution log 132, the defect analysis device 100 starts the correction part determination processing. Note that the source code 130, the specification information 131, and the execution log 132 may be input to the defect analysis device 100 in advance. In this case, the correction part determination processing is started in response to the execution instruction from a user.

Initially, the analysis unit 120 executes the correction part candidate analysis processing (step S101). Here, the correction part candidate analysis processing will be described with reference to FIG. 5.

The analysis unit 120 extracts a calling relationship between functions using the source code 130 (step S201). The information indicating the calling relationship between the functions is stored in a work area.

The analysis unit 120 then specifies an analysis start point based on the execution log 132 (step S202).

Specifically, the analysis unit 120 specifies statement in which a defect such as an exception has occurred as an analysis start point. Note that, in a case where a plurality of statements that can be analysis start points is present, the analysis unit 120 may inquire of a developer and receive inputs of the analysis start points.

The analysis unit 120 then specifies an analysis end point based on the calling relationship between the functions and the analysis start point (step S203).

Specifically, the analysis unit 120 specifies a function that calls the function included in the analysis start point based on the calling relationship between the functions, and presents the specified function to the developer. The analysis unit 120 specifies the function selected by the developer as an analysis end point.

The analysis unit 120 then performs backward symbolic execution starting from the analysis start point (step S204) .

Specifically, the analysis unit 120 performs symbolic execution in a direction opposite to the direction of the program starting from analysis start point. The analysis unit 120 records an execution path and a path condition in the correction part candidate information 133 during backward symbolic execution. In a case where the path condition is not satisfied, the analysis unit 120 ends the backward symbolic execution. An engine described in NPL 1 may be used as an engine that achieves the backward symbolic execution.

Note that the analysis unit 120 calculates an input parameter value of the function included in the analysis end point satisfying the path condition using a Satisfiability Modulo Theories (SMT) Solver. By conducting a test using this value as an input, the developer can confirm whether the modified program operates correctly.

The analysis unit 120 determines whether the end point of the backward symbolic execution matches a head line of the analysis end point (step S205).

In a case where the end point of the backward symbolic execution does not match the head line of the analysis end point, the analysis unit 120 determines a calling source of the function at the end point (step S206), and then returns to step S204. In step S204, the backward symbolic execution is performed at the calling source of the function at the end point.

In a case where the end point of the backward symbolic execution matches the head line of the analysis end point, the analysis unit 120 ends the correction part candidate analysis processing.

Here, the backward symbolic execution in a case where a line 13 in FIG. 2 is the analysis start point and a line 1 is the analysis end point will be described.

The analysis unit 120 sets a condition "b = 0 " under which division by 0 occurs, as the path condition. The analysis unit 120 performs a search in a reverse direction starting from a line 13. As a result, the lines 13 to 11 are recorded as the execution path. At this time, the path condition remains "b = 0 ".

Since the line 11 is not the analysis end point, the analysis unit 120 determines that the function foo has been called with the local variable b being 0, and specifies a statement (function) for reading the function foo. As a result, the analysis unit 120 specifies a line 8. The condition in the line 8 is "a - b = 0". Therefore, the analysis unit 120 records the lines 13 to 11 and the line 8 as the execution path, and updates the path conditions to "b = 0" in the function foo and "a - b = 0" in the function bar.

The analysis unit 120 performs a backward search starting from the line 8. As a result, the analysis unit 120 updates the execution path from the lines 13 to 11 and from the line 8 to the line 6. The condition in the line 6 is "a = b", which is equivalent to the condition "a - b = 0" in the line 8. Therefore, the path condition is not updated.

Since the line 6 is not the analysis end point, the analysis unit 120 determines that the function bar has been called with the local variables a and b being identical values, and specifies a statement (function) for reading the function bar. As a result, the analysis unit 120 specifies a line 3. The condition in the line 3 is "a = b". Therefore, the analysis unit 120 records the lines 13 to 11, the lines 8 to 6, and the line 3 as the execution path, and updates the path condition to "b = 0" in the function foo, "a - b = 0" in the function bar, and "a = b" in the function baz.

The analysis unit 120 performs a backward search starting from the line 3. As a result, the analysis unit 120 updates the execution path from the lines 13 to 11, from the lines 8 to 6, and the line 3 to the line 1. The condition in the line 1 is "a = b". Therefore, the path condition is not updated.

Since the line 1 is the analysis end point, the analysis unit 120 releases the path condition of the analysis end point, and records an input value. For example, "a = 0" and "b = 0" are recorded.

The correction part candidate analysis processing has been described above. The description returns to FIG. 4.

The influence range search unit 121 selects one correction part candidate with reference to the correction part candidate information 133 (step S102).

The influence range search unit 121 then specifies the influence range of the correction part candidate based on the calling relationship between the functions (step S103). The information indicating the influence range is stored in the work area.

The modification history acquisition unit 122 accesses to the software configuration management information 140 to acquire modification histories regarding respecting functions included in the influence range (step S104).

Note that in a case where the score is calculated without using the modification histories, the processing in step S104 can be omitted.

Next, the score evaluation unit 123 calculates a score of the selected correction part candidate based on the acquired modification histories (step S105). The score is stored in the work area.

The score evaluation unit 123 then determines whether the processing on all the correction part candidates has been completed (step S106).

In a case where the processing on all the correction part candidates is not completed, the score evaluation unit 123 calls the influence range search unit 121, and the processing returns to step S102.

In a case where the processing on all the correction part candidates is completed, the score evaluation unit 123 calls the correction part determination unit 124. The correction part determination unit 124 selects a correction part to be modified from the correction part candidates, based on the score (step S107). For example, a method for selecting a correction part candidate having the smallest score as the correction part is conceivable.

The correction part determination unit 124 then outputs information about the selected correction part as a processing result (step S108). Thereafter, the defect analysis device 100 ends the correction part determination processing. Note that the correction part determination unit 124 may also output information about the influence range and the like.

Note that the processing for specifying correction part candidates (analysis processing) and the processing for selecting a correction part (selection processing) may be executed by different computers. In this case, the computer that executes the selection processing receives the inputs of the correction part candidate information 133 and the source code 130 from the computer that executes the analysis processing, and executes the processing from step S102 to step S108.

According to the first embodiment, the defect analysis device 100 can specify a plurality of correction part candidates. In addition, the defect analysis device 100 can calculate, as a score, time and effort in the modification of an element included in each correction part candidate, based on the influence range and the modification histories, and determine a correction part candidate to be modified based on the score. The correction part can be selected based on the developer's sense of a load of the modification work by using the score for evaluating the influence on another function (statement) due to the modification of the element included in the correction part candidate, that is, the time and effort in the modification. Accordingly, the efficiency and accuracy of software debugging work can be improved.

### Second Embodiment

In a second embodiment, a score is calculated based on a relationship between a user who has modified a source code 130 and a software developer. Hereinafter, a portion of the second embodiment different from the first embodiment will be mainly described.

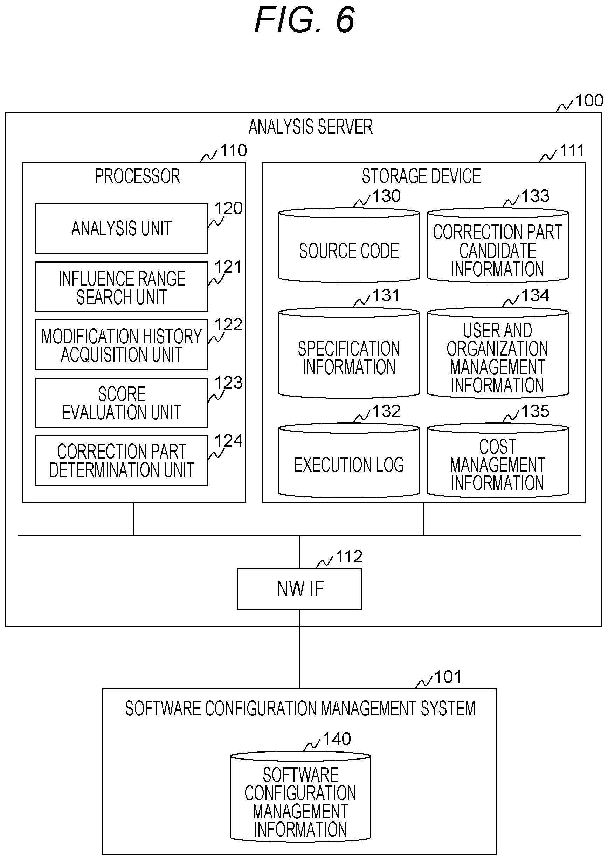

FIG. 6 illustrates a configuration example of a defect analysis device 100 according to the second embodiment.

The hardware configuration of the defect analysis device 100 according to the second embodiment is identical to the hardware configuration in the first embodiment. The functional configuration of the defect analysis device 100 according to the second embodiment is identical to the functional configuration in the first embodiment. In the second embodiment, information held by the defect analysis device 100 is partially different. Specifically, a storage device 111 of the second embodiment newly stores user and organization management information 134 and cost management information 135.

In general, multiple organizations frequently get involved in software development. Such a case may include various cases such as a case where, besides a department in charge of the software development project, the development is outsourced to an outside company, a case where a different department reuses a source code developed in the past, and a case where an open source is introduced.

From the viewpoint of defect correction, negotiation such as a request for correction work across organizations is necessary for modification of the source code and evaluation of the influence due to the modification. The time and effort for the work related to the source code modification may vary depending on the inside and outside of a department in charge, the inside and outside of an identical company, presence or absence of a development agreement, and the like.

It is also conceivable that the department in charge corrects and evaluates a source code developed by another organization. However, from the viewpoint of the degree of understanding and management of the source code, the work load is heavier than a development by a self department.

In the second embodiment, in consideration of the viewpoint described above, a score of a correction part candidate is calculated using the cost management information 135 in which the cost reflecting the relationship between the organization to which the developer belongs and the organization responsible for the function is set.

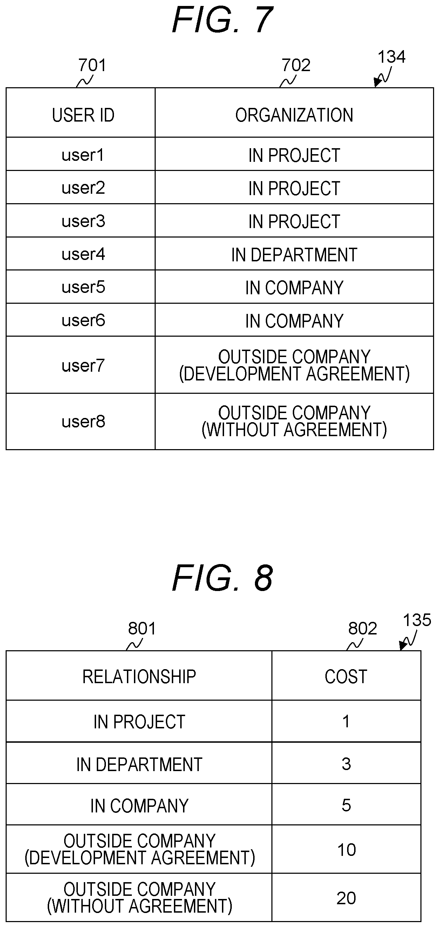

FIG. 7 illustrates an example of the user and organization management information 134 of the second embodiment.

The user and organization management information 134 is information for managing an organization to which a user belongs. The user and organization management information 134 stores an entry including a user ID 701 and organization membership 702. One entry exists for one user.

The user ID 701 is a field for storing identification information about a user. The user ID 701 includes identification information about a user registered in the software configuration management system 101.

The organization membership 702 is a field for storing a value indicating an organization to which the user belongs. Here, the organization is a concept including a group, a team, a department, and a company. The organization membership 702 stores a value indicating a relative organization set based on an organization (development project) to which a software developer belongs. Note that the organization membership 702 may store a specific organization name and the like.

Note that there may be a case where an external organization does not directly make a modification on the software configuration management system 101 used by the developer in introduction of an outside company. In this case, a responsible organization on the software configuration management system 101 can be clarified by assigning a virtual user to the organization or giving a comment to and managing the organization.

FIG. 8 illustrates an example of the cost management information 135 of the second embodiment.

The cost management information 135 is information for managing a cost set based on a relationship between the organization to which the developer belongs and an organization to which a user who has modified a certain function belongs. The cost management information 135 stores an entry including a relationship 801 and a cost 802. One entry exists for a relationship in one organization.

The relationship 801 is a field for storing a value indicating the relationship between the organization to which the developer belongs and the organization to which the user who has modified the function belongs.

The cost 802 is a field for storing a cost expressing time and effort (for example, negotiation) required for modifying a function included in a correction part candidate set based on the relationship between the organizations. The cost set as the cost 802 is dimensionless, and is not a numerical value representing absolute evaluation but a numerical value representing a sense of a load on a developer. In the second embodiment, a numerical value is set in accordance with the load.

The flow of the correction part determination processing according to the second embodiment is identical to the flow in the first embodiment. However, in the second embodiment, the user and organization management information 134 and the cost management information 135 are also input together with the source code 130, the specification information 131, and the execution log 132. Further, in the second embodiment, processing contents of steps S104 and S105 are partially different.

In step S104, the modification history acquisition unit 122 acquires modification histories including information about users who have made a modification.

In step S105, the score evaluation unit 123 specifies users who have modified respective functions included in the influence range using the modification histories. The score evaluation unit 123 specifies organizations to which the specified users belong with reference to the user and organization management information 134. The score evaluation unit 123 specifies the relationship between the organization to which the developer belongs and the organization to which the user who has made the modification belongs, and acquires the cost corresponding to the specified relationship between the organizations with reference to the cost management information 135. The score evaluation unit 123 calculates a total value of the acquired costs as a score.

Note that, in a case where the organization to which the developer belongs is identical to the organization to which the user who has made the modification belong, the score evaluation unit 123 may calculate a score for a set in which duplication of organizations specified based on the influence range is eliminated, in accordance with an idea such that time and effort in negotiation and the like are put together.

Note that, in a case where a plurality of modification histories of an identical function is present, a plurality of organizations might be specified for one function. In this case, the score evaluation unit 123 selects the organization with the lowest cost as an organization responsible for the function.

In the second embodiment, the correction part determination unit 124 selects a correction part candidate having the smallest score as a correction part.

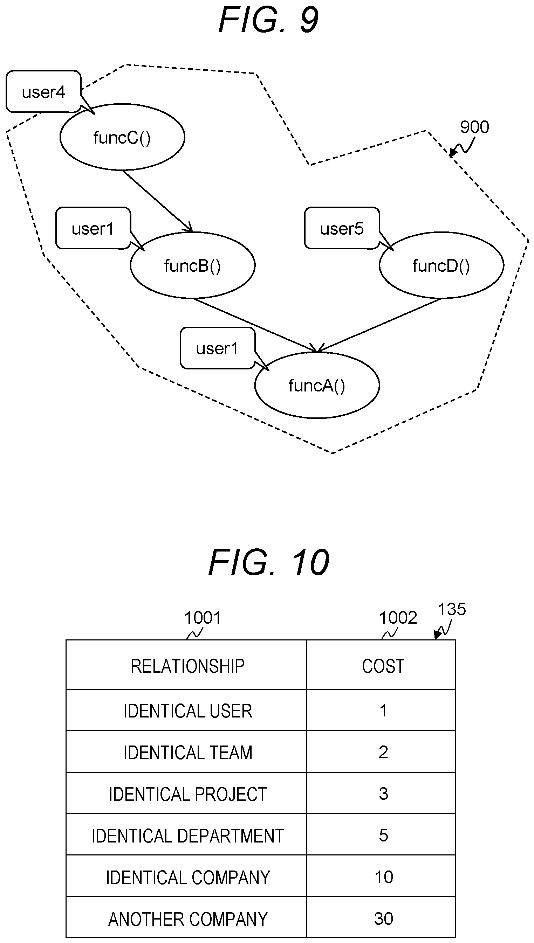

Here, a specific example of the score calculation method of the second embodiment will be described with reference to FIG. 9. FIG. 9 illustrates an example of an influence range specified by the defect analysis device 100 according to the second embodiment.

In a case where a correction part candidate including a function funcA() is set as an analysis start point, the influence range search unit 121 specifies an influence range 900 as illustrated in FIG. 9. The influence range 900 includes a function funcB(), a function funcC(), and a function funcD() . Arrows represent calling relationships between the functions.

The score evaluation unit 123 specifies a user who has made modification for each of the function funcA(), the function funcB(), the function funcC(), and the function funcD() based on the modification histories. Here, for simple description, it is assumed that "user 1" is specified for the function funcA(), "user 1" is specified for the function funcB(), "user 4" is specified for the function funcC(), and "user 5" is specified for the function funcD().

Since the function funcA() and the function funcB() are modified by the "user 1" belonging to the identical project, the respective costs are "1". Since the function funcC() is modified by the "user 4" belonging to an identical department, the cost is "3". Since the function funcD() is modified by the "user 5" belonging to an identical company, the cost is "5". Therefore, the score of the correction part candidate including the function funcA() is "10".

According to the second embodiment, scoring that reflects time and effort in negotiation between organizations and the like is possible. Therefore, the correction part can be selected based on a sense of the modification workload of the developer.

### Third Embodiment

In the second embodiment, the cost is set based on the relationship between the organization membership of the developer and the organization responsible for the function. In a third embodiment, a cost is set based on a relationship between organizations responsible for functions included in an influence range. Hereinafter, a portion of the third embodiment different from the first and second embodiments will be mainly described.

A configuration of a defect analysis device 100 according to the third embodiment is identical to the configuration of the second embodiment. The third embodiment is different from the second embodiment in the structure of cost management information 135.

In general, in a case of correcting a defect, a person who has modified a function of a calling source necessarily understands a modification content of a function of a calling destination and evaluates an influence on the function of the calling source. In this process, if an identical organization performs the function of the calling source and the function of the calling destination, the time and effort in the modification is minimized. On the other hand, in a case where development is performed in cooperation with an external organization or the like, which increases communication costs, correction of specifications in accordance with rules, review of changes, and the like are necessary, thereby increasing the time and effort in the modification.

In the third embodiment, a score of a correction part candidate is calculated using the cost management information 135 in which a cost reflecting the relationship between the organizations of the function of the calling source and the function of the calling destination is set. Note that the idea described above can be similarly applied to a relationship between users.

FIG. 10 illustrates an example of the cost management information 135 of the third embodiment.

The cost management information 135 is information for managing a cost set based on a relationship between organizations. The cost management information 135 stores an entry including a relationship 1001 and a cost 1002. One entry exists for a relationship in one organization. Note that the relationship between organizations may be changed to the relationship between users.

The relationship 1001 is a field for storing a value indicating a relationship between organizations to which users who have developed functions and have a calling relationship belong.

The cost 1002 is a field for storing a cost expressing time and effort required for modifying a correction part candidate set based on the relationship between the organizations to which the users who have developed the functions with calling relationship belong. The cost set as the cost 1002 is dimensionless, and does not represent an absolute evaluation but a numerical value representing a sense of a load among the organizations that have modified the function of the calling source and the function of the calling destination. In the third embodiment, a numerical value is set in accordance with the load.

Note that in the first entry of the cost management information 135, a cost is set based on the relationship between users.

The flow of the correction part determination processing according to the third embodiment is identical to the flow in the first embodiment. However, in the third embodiment, the user and organization management information 134 and the cost management information 135 are also input together with source code 130, specification information 131, and execution log 132. Further, in the third embodiment, processing contents of steps S104 and S105 are partially different.

In step S104, the modification history acquisition unit 122 acquires modification histories including information about users who have made a modification.

In step S105, the score evaluation unit 123 specifies users who have modified respective functions included in the influence range using the modification histories. The score evaluation unit 123 specifies organizations to which the specified users belong with reference to the user and organization management information 134. The score evaluation unit 123 specifies the relationship between the organizations to which the users belong for calling of the functions based on the calling relationship between the functions. The score evaluation unit 123 acquires the costs corresponding to the specified relationship between the organizations with reference to the cost management information 135. The score evaluation unit 123 calculates a total value of the acquired costs as a score.

Note that, in a case where a plurality of modification histories of an identical function is present, a plurality of organizations might be specified for one function. In this case, the score evaluation unit 123 selects the organization with the lowest cost as an organization responsible for the function.

In the third embodiment, a correction part determination unit 124 selects a correction part candidate having the smallest score as a correction part.

Here, a specific example of the score calculation method of the third embodiment will be described with reference to FIG. 9.

The score evaluation unit 123 specifies a user who has made a modification for each of a function funcA(), a function funcB(), a function funcC(), and a function funcD() based on the modification histories. Here, for simple description, it is assumed that "user 1" is specified for the function funcA(), "user 1" is specified for the function funcB(), "user 4" is specified for the function funcC(), and "user 5" is specified for the function funcD().

Since the relationship between the organizations in the calling relationship between the function funcA() and the function funcB() is "identical user", the cost is "1". Since the relationship between the organizations in the calling relationship between the function funcB() and the function funcC() is "in identical department", the cost is "5". Since the relationship between the organizations in the calling relationship between the function funcA() and the function funcD() is "in identical company", the cost is "10". Therefore, the score of the correction part candidate including the function funcA() is "16".

According to the third embodiment, scoring that reflects time and effort in negotiation between organizations and the like is possible. Therefore, the correction part can be selected based on a sense of the modification workload of the developer.

The scoring of the second embodiment and the third embodiment may be performed in parallel, and a total value of the scores by the scoring of the second embodiment and a total values of the scores by the scoring of the third embodiment may be calculated as the scores of the correction part candidates. In this case, it is assumed that the criteria of costs to be set in the cost management information 135 of the second embodiment and the cost management information 135 of the third embodiment are made uniform.

Note that, in a case where importance is placed on either of the scores by the scoring of the second embodiment and the scores by the scoring of the third embodiment, weighted average values calculated by multiplying the respective scores by a weight can be compared.

### Fourth Embodiment

In a fourth embodiment, a cost is corrected based on a relationship between simultaneity, and date and time of a modification of a source code 130. Hereinafter, a portion of the fourth embodiment different from the first and third embodiments will be mainly described.

In the software development, an operation (commitment) for registering a source code 130 in which closely related functions are collectively modified in a software configuration management system 101 is performed. The simultaneity of the modification means that modification contents of functions are simultaneously registered by the commitment.

Since the functions simultaneously modified by the commitment are highly related, it is considered that less time and effort is required for modifying these functions. On the other hand, since functions modified at different timings have low relevance and requires work such as negotiation, it is considered that great time and effort is required for modifying the functions.

In a case where the date and time intervals of modifications of the two functions are short, the relevance of the functions is estimated to be high. Therefore, the idea identical to that described above is applied to the date and time. That is, in a case where the date and time intervals of the modifications are short, less time and effort is required for modifying the functions. In a case where the date and time intervals of the modifications are long, great time and effort is required for modifying the functions.

A configuration of a defect analysis device 100 according to the fourth embodiment is identical to the configuration of the first embodiment.

The flow of correction part determination processing according to the fourth embodiment is identical to the flow in the first embodiment. However, the processing contents of steps S104 and S105 are partially different.

In step S104, a modification history acquisition unit 122 acquires a modification history including information about a user who has made a modification, simultaneity of the modification, and date and time of the modification.

In step S105, the score evaluation unit 123 specifies users who have modified respective functions included in the influence range using the modification histories. The score evaluation unit 123 specifies organizations to which the specified users belong with reference to user and organization management information 134. The score evaluation unit 123 specifies a relationship between organizations for respective calling of functions based on the calling relationship between the functions. The score evaluation unit 123 acquires a cost corresponding to the specified relationship between the organizations with reference to the cost management information 135. The score evaluation unit 123 corrects the cost based on the simultaneity of the modifications between the functions and the date and time of the modifications. For example, in a case of a combination of the functions with simultaneity of modifications, the cost is multiplied by 1, and in a case of a combination of functions without simultaneity of modification, the cost is multiplied by 1.3. Further, in a case where the date and time intervals of the modifications are less than a threshold, the cost is multiplied by 1, and in a case where the date and time intervals of the modifications are greater than the threshold, the cost is multiplied by 1.2. The score evaluation unit 123 calculates a total value of the corrected costs as a score.

According to the fourth embodiment, the cost is corrected based on the simultaneity of the modifications and the date and time of the modifications, and thus more accurate scoring can be performed.

Note that the present invention is not limited to the above-described embodiments, and includes various modifications. Further, for example, the above-described embodiments have described details of the configurations for easy understanding of the present invention, and are not necessarily limited to those having all the described configurations. In addition, a part of the configuration in each embodiment can be added to, deleted from, and replaced with another configuration.

Further, a part or all of the above-described configurations, functions, processing units, processing means, and the like may be implemented by hardware, in a manner that they are designed on an integrated circuit. Further, the present invention can also be implemented by a program code of software that achieves the functions of the embodiments. In this case, a storage medium in which the program code is recorded is provided to a computer, and a processor included in the computer reads the program code stored in the storage medium. In this case, the program code itself read from the storage medium achieves the functions of the above-described embodiments, and the program code itself and the storage medium storing the program code constitute the present invention. Examples to be used as the storage medium for supplying such a program code are a flexible disk, a compact disk read-only memory (CD-ROM), a digital video disk read only memory (DVD-ROM), a hard disk, a solid state drive (SSD), an optical disk, a magneto-optical disk, a compact disk recordable (CD-R), a magnetic tape, a non-volatile memory card, and a ROM.

In addition, the program code for achieving the functions described in the present embodiments can be implemented by a wide range of programs or script languages such as assembler, C/C++, perl, Shell, PHP, Python, and Java.

Furthermore, the program code of software that realizes the functions of the embodiments may be distributed via a network to be stored in storage means such as a hard disk or a memory of a computer or a storage medium such as a CD-RW or a CD-R, and the processor included in the computer may read and execute the program code stored in the storage means or the storage medium.

Further, in the above-described embodiments, the control lines and the information lines that are considered to be necessary for the description are indicated, and not all the control lines and the information lines of the product are necessarily indicated. All the configurations may be connected to each other.

## Claims

1. A computer comprising:
a processor; and
a storage device connected to the processor, the processor being configured to
receive, as inputs, a software source code including a plurality of statements including a plurality of elements, and correction part candidate information for managing, as correction part candidates, statements, among the plurality of statements including the plurality of elements, to be modified for removing a defect of the software source code,
select the correction part candidate and execute score calculation processing for calculating a score for evaluating time and effort to modify elements included in the selected correction part candidate, and
select at least one of the correction part candidate to be modified, based on the score of each of a plurality of correction part candidates,
wherein the score calculation processing includes
first processing for specifying, by analyzing the software source code, elements of statements among the plurality of statements other than the selected correction part candidates affected by the modification of the elements included in the selected correction part candidates, and the elements included in the selected correction part candidates, as an influence range, and
second processing for calculating the score of the selected correction part candidate based on the influence range.

2. The computer according to claim 1, wherein
the computer is accessible to software configuration management information storing the source code that has been modified, and
the second processing includes
third processing for acquiring modification histories regarding the plurality of elements included in the influence range from the software configuration management information, and
fourth processing for calculating the score using the modification histories.

3. The computer according to claim 2, wherein
the computer is accessible to organization management information for managing an organization to which a user belongs, and cost management information for managing association of a relationship between and costs of an organization to which a software developer belongs and an organization to which a user who has made a modification belongs,
the modification histories each include information about the user who has made the modification, and
the fourth processing includes
processing for specifying users who have made modifications on the plurality of elements included in the influence range, based on the modification histories,
processing for specifying organizations to which the specified users belong, based on the organization management information,
processing for acquiring the costs of the plurality of elements included in the influence range with reference to the cost management information, based on a relationship between the organizations to which the specified users belong and the organization to which the developer belongs, and
processing for calculating total values of the acquired costs as the score.

4. The computer according to claim 2, wherein
the computer is accessible to organization management information for managing organizations to which users belong and cost management information for managing association of a relationship between and costs of the organizations,
the modification histories each include information about a user who has made a modification, and
the fourth processing includes
fifth processing for specifying users who have made a modification respectively on the plurality of elements included in the influence range, based on the modification histories,
sixth processing for specifying organizations to which the specified users belong, based on the organization management information,
seventh processing for specifying a relationship between the organizations to which the users who have modified the elements belong, the elements being included in the influence range and having a calling relationship,
eighth processing for acquiring the costs of the elements included in the influence range and having the calling relationship with reference to the cost management information, based on the relationship between the specified organizations, and
ninth processing for calculating total values of the acquired costs as the score.

5. The computer according to claim 4, wherein
the modification histories each include a value related to a modification operation and a modification date and time, and
the eighth processing includes
processing for specifying a relationship of the modification operation and a relationship of the modification date and time between the elements included in the influence range and having a calling relationship, based on the modification histories, and
processing for correcting the costs based on the specified relationship of the modification operation and the specified relationship of the modification date and time.

6. A method for selecting a correction part of software executed by a computer having a processor and a storage device connected to the processor, the method for causing the processor to perform:
a first step of receiving, as inputs, a software source code including a plurality of statements including a plurality of elements, and correction part candidate information for managing, as correction part candidates, the plurality of statements including the plurality of elements to be modified for removing a defect of the software source code;
a second step of selecting the correction part candidate and executing score calculation for calculating a score for evaluating time and effort to modify elements included in the selected correction part candidate; and
a third step of selecting at least one of the correction part candidate to be modified, based on the score of each of a plurality of correction part candidates, and
wherein the second step includes
a forth step of specifying, by analyzing the software source code, elements of statements among the plurality of statements other than the selected correction part candidates affected by the modification of the elements included in the selected correction part candidates, and the elements included in the selected correction part candidates, as an influence range, and
a fifth step of calculating the score of the selected correction part candidate based on the influence range.

7. The method according to claim 6, wherein
the computer is accessible to software configuration management information storing the modified software source code, and
the fifth step of includes
a sixth step of acquiring modification histories regarding the plurality of elements included in the influence range from the software configuration management information, and
a seventh step of calculating the score using the modification histories.

8. The method according to claim 7, wherein
the computer is accessible to organization management information for managing an organization to which a user belongs, and cost management information for managing association of a relationship between and costs of an organization to which a software developer belongs and an organization to which a user who has made a modification belongs,
the modification histories each include information about the user who has made the modification, and
the seventh step includes
a step of specifying users who have made a modification on the plurality of elements included in the influence range, based on the modification histories,
a step of specifying organizations to which the specified users belong, based on the organization management information,
a step of acquiring the costs of the plurality of elements included in the influence range with reference to the cost management information, based on a relationship between the organizations to which the specified users belong and the organization to which the developer belongs, and
a step of calculating total values of the acquired costs as the score.

9. The method according to claim 7, wherein
the computer is accessible to organization management information for managing organizations to which users belong and cost management information for managing association of a relationship between and costs of the organizations,
the modification histories each includes information about a user who has made a modification, and
the seventh step includes
an eighth step of specifying users who have made a modification respectively on the plurality of elements included in the influence range, based on the modification histories,
a ninth step of specifying organizations to which the specified users belong, based on the organization management information,
a tenth step of specifying a relationship between the organizations to which the users who have modified the elements belong, the elements being included in the influence range and having a calling relationship,
an eleventh step of acquiring the costs between the elements included in the influence range and having the calling relationship with reference to the cost management information, based on the relationship between the specified organizations, and
a twelfth step of calculating total values of the acquired costs as the score.

10. The method according to claim 9, wherein
the modification histories each include a value and modification date and time related to a modification operation, and
the eleventh step includes
a step of specifying a relationship of the modification operation and a relationship of the modification date and time between the elements included in the influence range and having the calling relationship, based on the modification histories, and
a step of correcting the costs based on the specified relationship of the modification operation and the specified relationship of the modification date and time.
